**Europäisches Patentamt**

**European Patent Office**

**Office européen des brevets**

(19)

(11) Veröffentlichungsnummer: **0 061 579**
**B1**

(12) # EUROPÄISCHE PATENTSCHRIFT

(45) Veröffentlichungstag der Patentschrift:
**11.07.84**

(51) Int. Cl.³: **A 23 L  1/22**

(21) Anmeldenummer: **82101277.0**

(22) Anmeldetag: **19.02.82**

(54) **Aroma- und lagerstabiles Zitrusöl-Konzentrat.**

(30) Priorität: **28.03.81 DE 3112380**

(43) Veröffentlichungstag der Anmeldung:
**06.10.82 Patentblatt 82/40**

(45) Bekanntmachung des Hinweises auf die Patenterteilung:
**11.07.84 Patentblatt 84/28**

(84) Benannte Vertragsstaaten:
**CH DE FR GB LI NL SE**

(56) Entgegenhaltungen:
**BE - A - 549 252**
**US - A - 2 754 215**
**US - A - 3 353 961**

**FOOD TECHNOLOGIE, Band 32, Nr. 1, Januar 1978 D.C. CROCKER et al. "Improved encapsulated citrus oils" Seiten 36,38,39**

**Die Akte enthält technische Angaben, die nach dem Eingang der Anmeldung eingereicht wurden und die nicht in dieser Patentschrift enthalten sind.**

(73) Patentinhaber: **Ziegler, Erich, Draisendorfer Strasse 143, D-8551 Aufsess (DE)**

(72) Erfinder: **Ziegler, Erich, Draisendorfer Strasse 143, D-8551 Aufsess (DE)**

(74) Vertreter: **Tergau, Enno et al, Patentanwälte Tergau & Pohl Postfach 11 93 47 Hefnersplatz 3, D-8500 Nürnberg 11 (DE)**

EP 0 061 579 B1

## Beschreibung

Die Erfindung betrifft Konzentrate aus natürlichen Zitrusölen, die zur Geschmacksverbesserung von Natur-Fruchtsäften aus Zitrusfrüchten sowie auch von Limonaden verwendet werden.

Aus der natürlichen Frucht stammende Stoffe, die als Aromaträger bei den genannten Einsatzgebieten in Betracht kommen, fallen bei der Aufarbeitung der meist frisch geernteten Früchte zunächst als Schalenöl, Essenzöl sowie als wässrige Essenz an. Die Stoffe werden alsdann weiter konzentriert, um ihren Aromagehalt zu erhöhen sowie um unerwünschte Stoffe abzuscheiden. Die Rohstoffe sind komplizierte Gemische aus teils sehr thermolabilen Stoffen, welche als Träger der erwünschten Aromanuancen angesehen werden müssen. Die Thermolabilität der Rohstoffe bringt es mit sich, dass diese nur im tiefgekühlten Zustand gelagert und auch über Tiefkühlketten vom Hersteller an den Verbraucher, also in der Regel den Getränkehersteller geliefert werden müssen. Diese Notwendigkeit ist technisch aufwendig und verteuert die Getränke erheblich.

Der Erfindung liegt die Aufgabe zugrunde, ein lagerbeständiges Zitrusaroma-Konzentrat herzustellen, welches auch bei längerer Lagerung (einige Wochen bis mehrere Monate) bei Raumtemperatur sowohl in reiner wie auch in verdünnter Form sein Aroma nicht verändert oder verliert. Die Lösung dieser Aufgabe ergibt sich aus Patentanspruch 1.

Die Erfindung beruht auf der Beobachtung, dass im Schalenöl Stoffe enthalten sind, die als Stabilisatoren wirken. Die Stoffe können mit Hilfe geeigneter Verfahren angereichert und das so gewonnene Schalenöl-Konzentrat als Stabilisierungsmittel für natürliche Zitrusaroma-Konzentrate verwendet werden.

Zum leichteren Verständnis der Erfindung werden im folgenden einige Definitionen angeführt:

1. Unter «Schalenöl» werden Öle verstanden, die durch Pressen der vom Fruchtfleisch befreiten Zitrusfruchtschalen auf kaltem Wege gewonnen werden.
2. Unter «Essenzöl» wird die ölige Phase verstanden, welche beim Kondensieren der Brüden gewonnen wird, die beim Eindampfen von Zitrusfruchtsäften entweichen.
3. Unter «wässriger Essenz» wird die wässrige Phase verstanden, die beim Kondensieren der Brüden anfällt, die beim Eindampfen der Zitrusfruchtsäfte entweichen.

Die hier angesprochene Problematik besteht generell bei allen Erzeugnissen aus Zitrusfrüchten, wozu also insbesondere Orangen, Zitronen, Mandarinen und Grapefrüchte zu rechnen sind.

Eine bevorzugte Zusammensetzung des erfindungsgemäss vorgeschlagenen, lagerstabilen Zitrusaroma-Konzentrates zur Geschmacksverbesserung von Natur-Fruchtsäften aus Zitrusfrüchten sowie von Limonaden besteht aus 10 bis 90 Gew.% Zitrusschalenöl-Konzentrat und 90 bis 10 Gew.% Essenzöl-Konzentrat. Eine andere bevorzugte Zusammensetzung besteht aus 10 bis 95 Gew.% Zitrusschalenöl-Konzentrat, Rest Konzentrat aus wässriger Essenz. Eine weitere bevorzugte Zusammensetzung besteht aus 10 bis 90 Gew.% Zitrusschalenöl-Konzentrat, 5 bis 85 Gew.% Essenzöl-Konzentrat und 5 bis 85 Gew.% Konzentrat aus wässriger Essenz.

Wesentlich für die Lagerstabilität des angegebenen Zitrusöl-Konzentrates ist die Herstellung des Schalenölkonzentrates. Der Erfinder hat beobachtet, dass die erwähnten als Stabilisatoren wirkenden Stoffe aus dem Zitrusschalenöl-Konzentrat gewonnen bzw. in diesem angereichert werden können, wenn das kaltgepresste Zitrusschalenöl in einer chromatografischen Säule über solche feste Trennmittel geleitet wird, die polare organische Stoffe adsorbieren. Als besonders geeignet hat sich aktives Kieselgel erwiesen; es sind aber auch andere entsprechend wirkende Trennmittel brauchbar, beispielsweise fein verteiltes Aluminiumoxid. Nach dem Überleiten des Ausgangsöles wird das Trennmittel mit wenig unpolarem Lösungsmittel, beispielsweise Petroläther, nachgewaschen und dann die adsorbierte Fraktion mit einem polaren organischen Stoff, beispielsweise Ethanol eluiert. Aus dem Eluat kann die zurückgewonnene adsorbierte Fraktion mit gesättigter Kochsalzlösung ausgeschieden werden.

Die Adsorption in der chromatografischen Trennsäule hat sich am wirkungsvollsten erwiesen. Es ist aber auch möglich, die gewünschten Stoffe durch Extraktion mit polaren organischen Lösungsmitteln anzureichern. Unter «polaren organischen Lösungsmitteln» werden chemisch einheitliche Stoffe aber auch Gemische aus mehreren polaren organischen Lösungsmitteln verstanden. Als besonders geeignet für die Durchführung dieses Verfahrens hat sich Ethanol erwiesen.

Durch die erwähnten Methoden werden die hier in Betracht kommenden Stoffe, nämlich Tocopherole, Carotinoide, Lipoide, Phosphorlipide und ähnliche Stoffgruppen angereichert. Unerwünschte labile Verbindungen der Zitrusprodukte, wie Monoterpene und Sesquiterpene werden weitgehend abgeschieden.

Die Erfindung wird im folgenden anhand einiger Beispiele erläutert:

Beispiel 1

Gewinnung von lagerstabilem und konservierend wirkendem Orangen-Schalenölkonzentrat

Ein Glasrohr mit 13 mm Durchmesser und 1000 mm Länge wurde mit 35 g aktivem Kieselgel gefüllt. Durch die so vorbereitete Trennsäule wurden 200 g kalt gepresstes kalifornisches Orangenöl geleitet. Nach dem Durchlauf des Öles wurde mit 50 ml Petroläther nachgewaschen und danach mit 150 ml konzentriertem Ethanol (96 Vol%) eluiert.

Das gewonnene Eluat wurde in 500 ml gesättigte Kochsalzlösung eingegossen, wobei sich ein Öl abschied. Nach dem Absetzen wurden die Phasen getrennt und es wurden ca. 5 g konzentriertes Orangenöl erhalten.

Daten: D 20°C = 0,913 g/cm³
$n_D$20°C = 1,478

Zusammensetzung:
31,8% Aldehyd, berechnet als Dezylaldehyd
0,9% Säure berechnet als Essigsäure
16,6% Ester berechnet als Geranylazetat
18,2% Alkohol berechnet als Linalool.

Das gewonnene Konzentrat war in 96%igem Ethanol unlöslich.

Beispiel 2

Gewinnung von lagerstabilem und konservierend wirkendem Grapefrucht-Schalenölkonzentrat
Ein Glasrohr mit 13 mm Durchmesser und 1000 mm Länge wurde mit 35 g aktivem Kieselgel gefüllt. Durch das so vorbereitete Adsorptionsrohr wurden 200 g kaltgepresstes Grapefruchtöl geleitet und nach dessen Durchlauf mit 50 ml Petroläther nachgewaschen. Nach Ablauf des Petroläthers wurde mit 150 ml Ethanol (96 Vol.%) eluiert. Das Eluat wurde aufgefangen und der Ethanol unter vermindertem Druck abdestilliert (Druck etwa 20 mbar). Als Rückstand wurden ca. 5 g Grapefruchtöl-Konzentrat erhalten.

Daten: D 20°C = 1,017 g/cm³
$n_D$20°C = 1,52

Das Öl war unlöslich in 96%igem Ethanol.

Beispiel 3

Gewinnung von lagerstabilem und konservierend wirkendem Zitronen-Schalenölkonzentrat
In einem Scheidetrichter mit 500 ml Inhalt wurden 200 g Zitronenschalenöl eingefüllt. Das Öl wurde viermal mit je 100 ml Ethanol (73 Gew.%) ausgeschüttelt und die Alkoholphase abgetrennt. Die vereinigten Alkoholphasen wurden in 800 ml gesättigte Kochsalzlösung eingerührt, wobei sich ein Öl abschied. Nach dem Absetzen des Öles und Waschen mit zweimal 50 ml Wasser wurde 22 g Konzentrat gewonnen.

Daten: D 20°C = 0,860
$n_D$20°C = 1,477

Löslichkeit in 90%igem Ethanol 1:3.

Zusammensetzung:
12,7% Aldehyd berechnet als Dezylaldehyd
0,15% Säure berechnet als Essigsäure
5,8% Ester berechnet als Geranylazetat

Beispiel 4

Gewinnung eines Orangen-Essenzölkonzentrates
In einen Scheidetrichter mit 200 ml Inhalt wurden 100 g Orangenessenzöl eingefüllt. Das Öl wurde viermal mit je 50 ml Ethanol (62 Gew.%) ausgeschüttelt und die Alkoholphase abgetrennt. Die vereinigten Extrakte wurden in 500 ml gesättigte Kochsalzlösung eingerührt, wobei sich ein Öl abschied. Nach dem Absetzen des Öles wurde dieses in bekannter Weise gewonnen. Ausbeute: 6 g.

Daten: D 20°C = 0,857 g/cm³
$n_D$20°C = 1,476

Löslichkeit in 90%igem Ethanol 1:1.

Zusammensetzung:
12,2% Aldehyd berechnet als Dezylaldehyd
0,1% Säure berechnet als Essigsäure,
5,7% Ester berechnet als Geranylazetat

Beispiel 5

Gewinnung eines Grapefrucht-Essenzölkonzentrates
In eine Fraktionierapparatur, deren Kolbeninhalt 1000 ml betrug, und die einen Fraktionieraufsatz aufwies, wurden 500 g Grapefruchtessenzöl eingefüllt. Bei vermindertem Druck von 20 mbar und Kühlung der Vorlage mit flüssigem Stickstoff wurde die Destillation durch vorsichtige Temperaturerhöhung langsam eingeleitet. Nachdem 15 ml Destillat übergegangen waren, wurde die Destillation abgebrochen. Das Destillat stellte das gewünschte Konzentrat her. Es hatte folgende Daten:

D 20°C = 0,842
$n_D$20°C = 1,4705

Löslichkeit in 90%igem Ethnaol 1:6

Zusammensetzung:
3,17% Aldehyd berechnet als Dezylaldehyd
0,02% Säure berechnet als Essigsäure
3,0% Ester berechnet als Geranylazetat.

Beispiel 6

Gewinnung eines Konzentrates aus wässriger Orangenessenz
In eine Fraktionierapparatur mit 1000 ml Kolbeninhalt und Fraktionieraufsatz wurde 500 g wässrige Orangenessenz eingefüllt. Nach langsamem Abdestillieren der bis 85°C übergehenden Fraktion wurden 30 ml Destillat erhalten. Das Destillat war das gewünschte Konzentrat. Es hatte folgende Daten:

D 20°C = 0,813 g/cm³
$n_D$20°C = 1,365

Löslichkeit: Klar löslich in Orangen-Schalenöl und Wasser.

Zusammensetzung:
5,6% Aldehyd, berechnet als Dezylaldehyd

0,02% Säure, berechnet als Essigsäure,
0,46% Ester, berechnet als Geranylazetat

Erfindungsgemäss wird das gewonnene Schalenöl-Konzentrat nun je nach Bedarf mit Essenzöl-Konzentrat, dem Konzentrat der wässrigen Essenz oder beiden vermischt. Die einzusetzende Menge des Schalenöl-Konzentrates richtet sich nach dem Grad der gewünschten Stabilisierung sowie auch danach, ob der Geschmack der Fruchtschale hervorgehoben werden soll oder nicht.

Die Konzentrate haben starkes Aromatisierungsvermögen. 5–10 g der Konzentratmischung ist ausreichend für die Aromatisierung von 100 l Limonade.

Zur Demonstration der Haltbarkeit wurde der sogenannte «Tocopherol-Test» herangezogen. Tocopherol (Vitamin E) ist bekanntlich eine äusserst thermolabile Substanz, welche in zahlreichen Früchten, so auch in Zitrusfrüchten vorkommt. Tocopherol kann durch Dünnschichtchromatografie bestimmt werden. Hochauflösende Dünnschichtchromatografie-Fertigplatten der Firma Merck Darmstadt wurden zur Durchführung des hier gewählten Vergleichstestes verwendet.

Zur Durchführung des Testes wurden 20 µl der zu untersuchenden Substanz auf eine chromatografische hochauflösende Dünnschichtplatte aufgetragen. Als Fliessmittel wurde Chloroform in aufsteigender Phase verwendet. Nach Durchführung der Trennung wurde die Platte mit einer Lösung von einem Teil Antimonpentachlorid in vier Teilen Chloroform besprüht. Der Tocopherolfleck wurde dabei durch eine rotbraune Färbung sichtbar.

| Substanz | sofort | 2 Wo | 3 Mon | 6 Mon | 9 Mon |
|---|---|---|---|---|---|
| frisches Orangenschalenöl | + | − | − | − | − |
| Orangenschalenöl-Konzentrat n. Beispiel 1 | + | + | + | + | schwach |
| Orangenessenzöl-Konzentrat n. Beisp. 3 | + | + | + | + | schwach |

Die Lagerversuche, deren Ergebnisse vorstehend wiedergegeben sind, wurden bei 20 °C durchgeführt.

## Patentansprüche

1. Verwendung von Schalenöl-Konzentrat, hergestellt aus kaltgepresstem Zitrusschalenöl durch Adsorption an polare organische Stoffe adsorbierenden festen Trennmitteln oder durch Extraktion mit polaren flüssigen Lösungsmitteln, als Stabilisierungsmittel für natürliche Zitrusaromakonzentrate.

2. Laberstabiles Zitrusaroma-Konzentrat zur Geschmacksverbesserung von Naturfruchtsäften aus Zitrusfrüchten sowie von Limonaden, bestehend aus 10 bis 90 Gew.% Zitrus-Schalenölkonzentrat, hergestellt aus kaltgepresstem Zitrusschalenöl durch Adsorption an polare organische Stoffe adsorbierenden festen Trennmitteln oder Extraktion mit polaren flüssigen Lösungsmitteln und 90 bis 10 Gew.% Essenzöl-Konzentrat.

3. Lagerstabiles Zitrusaroma-Konzentrat gemäss Anspruch 1, bestehend aus 10 bis 95 Gew.% Zitrus-Schalenlkonzentrat, hergestellt aus kaltgepresstem Zitrusschalenöl durch Adsorption an polare organische Stoffe adsorbierenden festen Trennmitteln oder Extraktion mit polaren flüssigen Lösungsmitteln, Rest Konzentrat aus wässriger Essenz.

4. Lagerstabiles Zitrusaroma-Konzentrat gemäss Anspruch 1, bestehend aus 10 bis 90 Gew.% Zitrus-Schalenölkonzentrat, hergestellt aus kaltgepresstem Zitrusschalenöl durch Adsorption an polare organische Stoffe adsorbierenden festen Trennmitteln oder Extraktion mit polaren flüssigen Lösungsmitteln, 5 bis 85 Gew.% Essenzöl-Konzentrat, 5 bis 85 Gew.% Konzentrat aus wässriger Essenz.

## Claims

1. Use of peel oil concentrate, prepared from cold-pressed citrus peel oil by adsorption on solid separating agents which adsorb polar organic substances or by extraction with polar liquid solvents, as a stabiliser for natural citrus flavour concentrates.

2. Citrus flavour concentrate, having a long shelf life, for improving the flavour of natural fruit juices obtained from citrus fruits and of soft drinks, which consists of 10 to 90% by weight of citrus peel oil concentrate, prepared from cold-presssed citrus peel oil by adsorption on solid separating agents which adsorb polar organic substances or by extraction with polar liquid solvents, and 90 to 10% by weight of an essential oil concentrate.

3. Citrus flavour concentrate, having a long shelf life, according to Claim 1, which consists of 10 to 95% by weight of citrus peel oil concentrate, prepared from cold-pressed citrus peel oil by adsorption on solid separating agents which adsorb polar organic substances or by extraction with polar liquid solvents, the remainder being a concentrate of aqueous essence.

4. Citrus flavour concentrate, having a long shelf life, according to Claim 1, which consists of 10 to 90% by weight of citrus peel oil concentrate, prepared from cold-pressed citrus peel oil by adsorption on solid separating agents which adsorb polar organic substances or by extraction with polar liquid solvents, 5 to 85% by weight of essential oil concentrate, and 5 to 85% by weight of a concentrate of aqueous essence.

## Revendications

1. Utilisation de concentré d'essence d'écorce, fabriqué à partir d'essence d'écorce de citrus pressée à froid par adsorption sur des agents de séparation solides adsorbant les substances organiques polaires ou par extraction par des solvants liquides polaires, comme agents stabilisants pour les concentrés naturels d'arôme de citrus.

2. Concentré d'essences naturelles de citrus, d'arôme stable et stable au stockage, caractérisé en ce qu'il consiste en 10 à 90% en poids de concentré d'essence d'écorce de citrus, fabriqué à partir d'essence d'écorce de citrus pressée à froid par adsorption sur des agents de séparation solides adsorbant les substances organiques polaires ou extraction par des solvants liquides polaires, le reste en concentré d'huile essentielle.

3. Concentré d'essences naturelles de citrus, d'arôme stable et stable au stockage, caractérisé en ce qu'il consiste en 10 à 95% en poids de concentré d'essence d'écorce de citrus, préparé à partir d'essence d'écorce de citrus pressée à froid par adsorption sur des agents de séparation solides adsorbant les substances organiques polaires ou par extraction par des solvants liquides polaires, le reste en concentré d'essence aqueuse.

4. Concentré d'essences naturelles de citrus, d'arôme stable et stable au stockage, caractérisé en ce qu'il consiste en 10 à 90% en poids de concentré d'essence d'écorce de citrus, préparé à partir d'essence d'écorce de citrus pressée à froid par adsorption sur des agents de séparation solides adsorbant les substances organiques polaires ou par extraction par des solvants liquides polaires, 5 à 85% en poids de concentré d'huile essentielle, 5 à 85% en poids de concentré d'essence aqueuse.